(19) Europäisches Patentamt / European Patent Office / Office européen des brevets

(11) **EP 2 711 063 A1**

(12) **EUROPEAN PATENT APPLICATION**

(43) Date of publication:
26.03.2014 Bulletin 2014/13

(51) Int Cl.:
***B01D 15/18*** (2006.01)

(21) Application number: 12006612.1

(22) Date of filing: 20.09.2012

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zurich**
**8092 Zurich (CH)**

(72) Inventors:
• **Jermann, Simon Manuel**
**4243 Dittingen (CH)**
• **Alberti, Andreas Stefano Leon Battista**
**6648 Minusio (CH)**
• **Mazzotti, Marco Giuseppe**
**8044 Zürich (CH)**

(54) **Method and apparatus for multi column chromatographic purification**

(57) A method for separating a feed mixture comprising at least two solutes by an intermittent multi column chromatography process with a basic step N performed in a predetermined switching time period. Basic step N comprises two sub steps which are carried out sequentially according to a predetermined step ratio. In sub step one inlet ports and outlet ports are open, a desorbent and a feed mixture enters upstream of a first and a third section. A first outlet stream comprising the desorbent and at least one solute is withdrawn downstream of the first section a second outlet stream comprising the desorbent and at least a further solute is withdrawn downstream of a the third section. In sub step two inlet ports and outlet ports are closed, a fluid stream comprising the desorbent part of the feed mixture circulates through three sections in a closed loop.

Fig. 2

**Description**

TECHNICAL FIELD

The invention relates to a method for separating a feed mixture comprising at least two solutes by an intermittent multi column chromatographic process.

STATE OF THE ART

Chromatography is well established both as a standard analytical tool and as a preparative purification method. It is defined as a process that employs a structure holding a solute-interacting material, known as the stationary phase, to separate a mixture of solutes that are dissolved in a fluid and carried through the stationary phase by a fluid flow, known as the mobile phase. The interaction of the solutes and the stationary phase includes a variety of physical mechanisms, e.g. among others adsorption, steric interaction, hydrophobic interaction, electrostatic interaction, complexation or biospecific interaction. Moreover, the structure holding the stationary phase can vary distinctly; whereas it typically consists of a fixed bed column, i.e. a column that is densely packed with small particles, other embodiments such as monolithic columns or rotating structures comprising a fluid which is kept stationary by centrifugal forces might be employed.

Traditionally, preparative chromatographic separations are carried out in batch mode, i.e. a small amount of the mixture to be separated is injected onto a column and eluted from the column by means of a fluid flow. The solutes constituting the mixture separate from each other as they travel along the column due to their varying strength of interaction with the stationary phase material. At the column's end, a switching valve allows for collecting the purified components. With respect to large-scale industrial application, batch chromatography has some major drawbacks, namely (i) the often inefficient usage of the stationary phase, (ii) the large volumes of fluid needed, (iii) the limited purity obtained for solutes with small differences in their interaction strength with the stationary phase and (iv) the discontinuity of the process.

One way to overcome these limitations of batch chromatography is known as Simulated Moving Bed (SMB) chromatography which was patented by Broughton et al, US 2985589 in 1961. The SMB technology is a multi-column continuous process that can separate a mixture into two fractions. The columns constituting an SMB unit are grouped into four sections by two inlet streams (feed, desorbent) and two outlet streams (extract, raffinate) which are regularly shifted by one column in direction of the fluid flow. The underlying principle of that synchronized shifting is the approximation of a continuous counter-current flow of the solid phase by moving the relative position of the inlet and outlet streams over a finite length, i.e. the column length, at discrete times, i.e. the switch time. In order to better approximate the idealized continuous counter-counter movement of the solid phase, the sections of an SMB unit are typically further divided into several columns. Usually two columns per section are used, which is referred to as 2-2-2-2 configuration, i.e. the unit comprises in total eight columns that are connected in series and grouped into sections of two columns by the inlet and outlet streams.

Originally, the SMB technology was developed in the oil industry where it was employed for the separation of xylene isomers at megaton-scale. Later on the technology was adapted in the food industry where it was mainly used for large scale sugar purification. Only in the early 1990ies, when the regulations on chiral drugs became stricter and forced pharmaceutical companies to produce single enantiomer drugs, SMB was brought to the attention of drug manufacturers as a potential technique to supplement their chiral toolbox, which triggered increased research activities and new modes of operation with higher productivities emerged. Nowadays, Simulated Moving Bed (SMB) Chromatography is a well-established separation technique which is literally applied at any scale in the chemical, food, pharmaceutical and biotechnological industry. In a conventional SMB process consisting of four sections (I to IV), typically binary feed mixtures consisting of a solvent and two solutes A and B are separated. The feed enters upstream of section III, the less retained solute B is withdrawn downstream of section III, furthermore the mobile phase enters upstream of section I and the more retained component A is withdrawn downstream of section I. Thus, both inlet streams are continuously fed to and both outlet streams are continuously withdrawn from the unit. Furthermore it is noted, that the actual separation of the binary mixture occurs in sections II and III, whilst section I is used to regenerate the stationary phase and section IV is used to regenerate the mobile phase.

The main disadvantage of the conventional SMB is the number of columns, which are necessary to guarantee a reliable separation of the products. It is well-known for example that dispersion spoils the product when the conventional SMB is operated in a 1-1-1-1 configuration, i.e. when using only one column per section is used.

In the past the conventional SMB process was often modified in mode of operations in order to increase the productivity and the purity of the products.

One of these modified processes is known as a method of three-zone simulated moving bed process using partial recycle by Lee et al. KR20090039979. Similar to the conventional SMB the three-zone SMB process with partial recycling of a less retained component B is a continuous process. Compared to conventional SMB however, the switch time of the three-zone SMB process is divided into two sub steps. Sub step one is operated as an open-loop process with three sections. The solvent enters section I. The feed comprising component A and B to be separated enters the process between section II and III. The more retained component A is continuously withdrawn from the process between section I and section II as an extract. The less retained component B continuously leaves the process after section III. In sub step two the less retained component B is recycled to section I. Component A is continuously withdrawn after section I. The feed is continuously supplied between section II and III. Fresh solvent enters prior the first section.

Lee et al. tested their process on two fully theoretical studies based on simulations, without performing any proof-of-concept experiments. In a first study, Lee et al. examined the separation of xylitol and maltitol, using pure deionized water as mobile phase. Furthermore, the separation of quinidine and cinchonidine in a water/Acetonitril mixture with 0.075M potassium phosphate was studied. In both studies the same stationary phase, namely Kromasil C18 was used. The xylitol/maltitol system was studied under linear chromatographic conditions, whereas the quinidine/cinchonidine system was studied at a feed concentration of 0.1 g/l per solute, i.e. under slightly non-linear chromatographic conditions which can be described by the Langmuir adsorption isotherm.

When testing the method according to the invention, racemic mixtures of Tröger's Base in the mobile phase ethanol are separated on a chiral stationary phase. The feed concentrations are between 5 and 15 g/l and therefore higher than in Lee's studies. The system is more complex since it is non-linear and follows a Bi-Langmuir Isotherm.

Lee et al further claim that their process yields high purity products, even if only one column per section is used. However, it is well-known that dispersion spoils the products when continuously operated SMB units employ only one column per section. Since Lee et al. feed their unit continuously, it is therefore doubtful that the reported purities, especially the extract purity, would still be obtained if the simulations had been run using realistically high values for the diffusion and mass transfer coefficients. Intuitively such high purities are only possible when either both diffusion and mass transfer effects are neglected to a large extent or when two or more columns per section are used instead of one as proposed by Lee et al. Since commercially available SMB plants cannot be employed to run the method proposed by Lee et al. without certain modifications on both the hardware and the control software, neither of which being proposed in KR20090039979, the method of three-zone simulated moving bed process using partial recycle still lacks the proof that the claimed purities can be achieved under realistic laboratory or industrial conditions.

Another modification of the conventional SMB is the so-called intermittent SMB (I-SMB) process which has been patented by Tanimura et al. US 5064539. The I-SMB process comprises four sections. In the I-SMB process the switch time is also divided into two substeps. In the first sub-step the unit is operated as the conventional SMB with the two inlet streams (feed, mobile phase) and the two outlet streams (extract, raffinate). During sub step-one the fourth section is not in use. In the second sub-step, the inlet and outlet ports are closed and the mobile phase is just circulated along the four sections of the I-SMB. In sub-step two the flow rate in all four sections is therefore identical, thus allowing to move the concentration profiles of the fluid along the columns and to adjust the relative position of the profiles with respect to the location of the inlet and the outlet streams. Generally, the I-SMB process works with four sections, wherein one sections comprises at least one column, which is referred to as 1-1-1-1 configuration. It has been shown that I-SMB in 1-1-1-1 configuration doubles the productivity of 1-2-2-1 conventional SMB whilst fulfilling high purity specifications (see e.g. S. Katsuo, M. Mazzotti, Intermittent simulated moving bed chromatography: 1. Design criteria and cyclic steady-state, J. Chrom. A 1217 (8) (2010) 1354-1361). This is a result of the semi-continuous mode of operation which ensures that the leading edge of the more retained component (component A) has a large clearing from the raffinate port, at the time of product withdrawal. Similarly the trailing edge of the less retained component B is far from the extract port during the withdrawal phase, therefore also a high extract purity can be achieved. Conventional SMB in contrast is operated continuously, therefore the decisive edges of the compositions fronts, namely front of A and tail of B, are much closer to the product ports (raffinate, extract) and hence dispersion causes a drop in purity.

I-SMB can therefore deliver good product purities using only four chromatographic columns, whereas the conventional SMB process usually requires six or more columns. Since the productivity of a chromatographic process is usually given in terms of throughput per unit time and unit volume of a stationary phase, a reduction of chromatographic columns yields a significantly higher performance in terms of productivity.

It is therefore an object of the invention to provide a method for improving the known I-SMB process, particularly the number of columns should be further reduced. Another object of the invention is to raise the productivity of the known I-SMB process productivity and to increase the purity of the product.

SUMMARY OF THE INVENTION

For the sake of simplicity, the term "column" will be used to refer to any structure holding the stationary phase. Furthermore it is noted, that any process separating a mixture of solutes based on different partitioning of these solutes between a stationary phase and a mobile phase is understood whenever the term "chromatography" is used.

One advantage of the method according to the invention, called the 3C-ISMB, is that it can be easily implemented on existing units, e.g. a conventional SMB unit or an I-SMB unit. Only a few and straightforward changes are necessary to change the operating conditions in order to boost the productivity of an existing plant. Basically, with the method according to the invention less columns and therefore less stationary phase is required which furthermore allows for employing higher flow rates. These features of the invention result in a significant rise of productivity which is usually defined in terms of throughput per unit time and unit volume of stationary phase. More precisely, the method according to the invention has potentially the threefold productivity as compared to standard SMB and an 80% higher productivity compared to the I-SMB process.

A further advantage of the method according to the invention is that no complete regeneration of the stationary phase and the desorbent is performed and therefore the stationary phase is much more exploited.

A further advantage of the method according to the invention is that it can be easily adapted to perform three-fraction separations by employing a 3C-ISMB cascade. With the 3C-ISMB cascade the method according to the invention is performed in at least two stages. The 3C-ISMB cascade is used when the feed mixture contains three or more components and the component of interest is neither the least nor the most retained component. Cascades of conventional SMB units are generally regarded as uneconomical due to the need for a very large number of columns, i.e. at least 12. In contrast, a 3C-ISMB cascade can be operated with only 6 columns which renders the cascade economically viable.

With the method according to the invention a feed mixture comprising at least one solvent and two solutes is separated by an intermittent multi column chromatography process with a basic step N performed in a predetermined switching time period (t*), basic step N comprises two sub steps which are carried out sequentially according to a predetermined step ratio ($\alpha$).

In sub step one inlet ports and outlet ports are opened, a desorbent enters upstream of a first section through a first inlet port IP1, the feed mixture enters upstream of a third section through a third inlet port IP3, a first outlet stream comprising the desorbent and at least one solute is withdrawn downstream of the first section through a first outlet port OP1, a second outlet stream comprising the desorbent and at least a further solute is withdrawn downstream of the third section through a third outlet port.

In sub step two inlet ports and outlet ports are closed, a fluid stream comprising the desorbent and part of the feed mixture is circulated through three sections in a closed loop.

The method according to the invention further provides a basic step N+1, where in sub step one the inlet ports and the outlet ports are open, the desorbent enters upstream of the first section through the second inlet port IP2, the feed mixture enters upstream of a third section through the first inlet port IP1, a first outlet stream comprising the desorbent and at least one solute is withdrawn downstream of the first section through the second outlet port OP2, a second outlet stream comprising the desorbent and at least a further solute is withdrawn downstream of the third section through the first outlet port OP 1.

In the method according to the invention, between basic step N and basic step N+1, a the position of feed mixture and desorbent supply and the position of withdrawal of out-let streams are shifted by one inlet port, respectively one outlet port, in direction of a the fluid flow.

In a further embodiment, in sub step two inlet ports and outlet ports are closed, a fluid stream comprising the desorbent and part of the feed mixture is circulated through all three sections in a closed loop.

In one embodiment of the method according to the invention each of the three sections comprises several columns. In a preferred embodiment one column.

The feed mixture to be separated with the method according to the invention comprises two solutes. In a further embodiment a feed mixture comprising at least three solutes is separated with the method according to the invention.

In a further embodiment a feed mixture, which comprises more than three solutes, wherein the solutes can be grouped in two or three groups according to their chromatographic properties is separated.

In one embodiment of the method according to the invention, the basic steps are performed in a first stage. One outlet stream produced in the first stage enters upstream to a third section of a second stage as a feed mixture.

In one further embodiment of the method according to the invention the desorbent is at least partially removed from one outlet stream produced in the first stage and enters upstream to a third section of a second stage as a feed mixture.

In one further embodiment of the method according to the invention one outlet stream produced in the first stage is temporarily stored before it enters upstream to a third section of the second stage as the feed mixture.

In one further embodiment of the method according to the invention one outlet stream of the first stage is directly fed to the third section of the second stage as a feed mixture.

In one further embodiment of the method according to the invention one outlet stream produced in a first unit is fed to a second unit after the end of the first stage or is fed back to the first unit after the end of the first stage.

In one further embodiment of the method according to the invention the basic steps of the first stage are performed within a first switching time period, t1 and the basic steps of the second stage are performed within a second switching time period, t2. In a preferred embodiment t1 $\leq$ t2.

In one further embodiment of the method according to the invention the basic steps of the first stage are performed in a first switching time period t1 and the basic steps of the second stage are performed in a second switching time period t2, whereby t1=t2.

In one further embodiment of the method according to the invention, the second unit has different, preferably lager dimensions than the first unit.

An apparatus, which is used to perform the method according to the invention, comprises, in a preferred embodiment, a first processing unit with three columns.

In a further embodiment the apparatus comprises a second processing unit with three additional columns.

In a further embodiment the first and the second processing unit are connected in series.

In a further embodiment the first and the second processing unit are connected via a buffer tank or a solvent removal unit.

A computer program product according to the invention comprising a computer program code means for controlling one or more processors of a computer system for controlling a method of separating a feed mixture comprising at least one solvent and two solutes by an intermittent multi column chromatography process with a basic step N performed in a predetermined switching time period. A basic step N comprises two sub steps which are carried out sequentially according to a predetermined step ratio ($\alpha$).

In sub step one inlet ports and outlet ports are opened, a desorbent enters upstream of a first section through a first inlet port, the feed mixture enters upstream of a third section through a third inlet port, a first outlet stream comprising the desorbent and at least one solute is withdrawn downstream of the first section through the first outlet port, a second outlet stream comprising the desorbent and at least a further solute is withdrawn downstream of a the third section through the third outlet port. In sub step two the inlet ports and outlet ports are closed, a fluid stream comprising the desorbent and part of the feed mixture are circulated through three sections in a closed loop. In a basic step N+1, sub step one the inlet ports and the out-let ports are open, the desorbent enters upstream of the first section through a second inlet port, the feed mixture enters upstream of a third section through a first inlet port, a first outlet stream comprising the desorbent and at least one solute is withdrawn downstream of the first section through the second outlet port, a second outlet stream comprising the desorbent and at least a further solute is withdrawn downstream of a the third section (III) through the first outlet port.

Between basic step N and basic step N+1, a position of feed mixture and desorbent supply and the position of withdrawal of outlet streams is shifted by one inlet port, respectively one outlet port, in direction of the fluid flow.

BRIEF DESCRIPTION OF THE DRAWINGS

In order to facilitate a fuller understanding of the present invention, reference is now made to the appended drawings. These references should not be construed as limiting the present invention, but are intended to be exemplary only.

Fig. 1 shows a process scheme of intermittent simulated moving bed (I-SMB) chromatography according to the state of the art,

Fig. 2 shows a process scheme according to the invention (3C-ISMB) with a closed loop and partial recycling in sub step two and schematically the internal concentration profiles of two components A and B,

Fig. 3 shows a comparison of internal concentration profiles with respect to component A and B of the I-SMB ((a)- (c)) and the method according to the invention, 3C-ISMB ((d) - (f)),

Fig. 4 shows schematically basic steps N, N+1, N+2 and N+m, each divided into sub step one and two,

Fig. 5 shows a process scheme according to invention for separating three-fractions applying a 3C-ISMB cascade using direct coupling,

Fig. 6 shows a process scheme according to the invention applying a 3C-ISMB cascade using direct coupling and solvent removal,

Fig. 7 shows a process scheme according to the invention applying a 3C-ISMB cascade using a buffer tank and reversed sequence of feeding and recycling in stage two,

Fig. 8 illustrates the laboratory experimental set up comprising three columns,

Fig. 9(a) shows comparative results with respect to the separation of a binary mixture, comprising components A and B achieved by the known I-SMB and by the 3C-ISMB according to the invention,

Fig. 9(b)        shows the results with respect to a three-fraction separation achieved by the 3C-ISMB cascade according to the invention,

Fig. 10(a)       shows the operating plane for the 3C-ISMB process according to the invention for separating a binary mixture subject to a Bi-Langmuir isotherm for three different feed concentrations,

Fig. 10 (b)      shows the operating plane of Fig. 10 (a) zoomed on the relevant area in the $(m_{II}/m_{III})$-plane,

Fig. 11 (a), (b)   shows the concentrations of components A and B in the outlet streams versus the cycle number for experimental run K,

Fig. 11 (c)      shows the purities of the outlet streams, i.e. the extract stream (17'K) and raffinate stream (18'K) versus the cycle number,

Fig. 12 (a), (b)   shows the concentrations of components A and B in the outlet streams versus the cycle number for experimental run L,

Fig. 12 (c)      shows the purities of the outlet streams, i.e. the extract stream (17'L) and raffinate stream (18'L) versus the cycle number,

Fig. 13 (a), (b)   shows the concentrations of components A and B in the outlet streams versus the cycle number for experimental run M,

Fig. 13 (c)      shows the purities of the outlet streams, i.e. the extract stream (17'M) and raffinate stream (18'M) versus the cycle number,

Fig. 14 (a)      shows a comparison of the productivity of the three experimental runs K, L, M

Fig. 14 (b)      shows the profile of the pressure drop versus the cycle numbers of run K,

Fig. 15         shows the operating plane of a 3C-ISMB cascade with two stages and

Fig. 16         shows a chromatogram of a ternary feed mixture and the outlet streams at steady state for the first and the second stage of a 3C-ISMB cascade.

DESCRIPTION OF EMBODIMENTS OF THE INVENTION

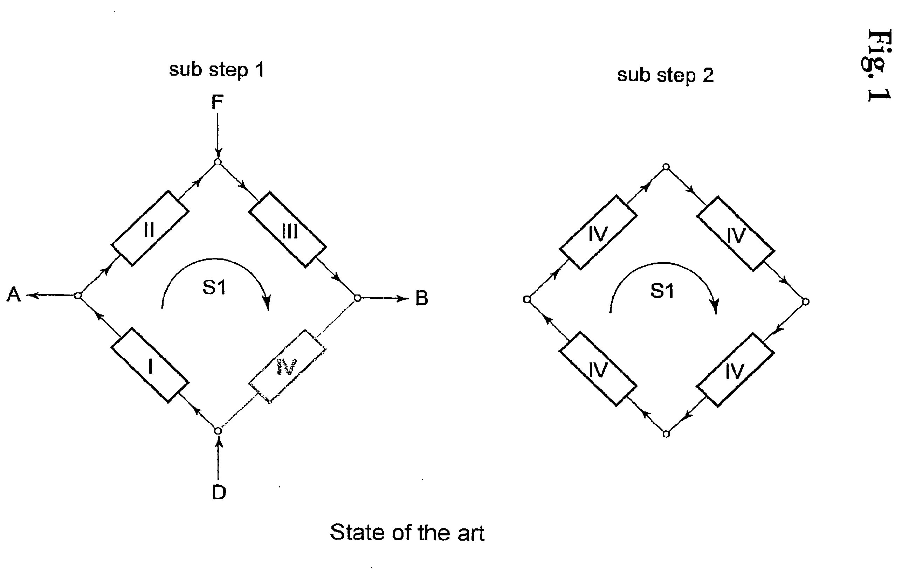

**Fig. 1** schematically represents the I-SMB known from the state of the art. The I-SMB unit consists of four sections (I to IV). A switch period is divided into two sub steps (sub step 1, sub step 2). In sub step 1 the unit is operated as an SMB without flow in section IV. Thus, a mobile phase (D) enters upstream of the first section (I). The more retained component (A) is withdrawn downstream of the first section (I) in an extract stream. A feed mixture stream (F) enters upstream of the third section (III). The less retained component (B) is withdrawn downstream of the third section (III) in a raffinate stream. In sub step 2 all inlet and outlet ports are closed (not shown) and the fluid is just circulated through all four sections (IV) in order to adjust the relative position of concentration profiles. The direction of the fluid flow is indicated by the arrow S1.

A semi-continuous mode of operation ensures that a leading edge of the more retained component (A) has a large clearing from the withdrawal of the less retained component (B). In a preferred embodiment, the method of the state of the art comprises one column in each section (I to IV).

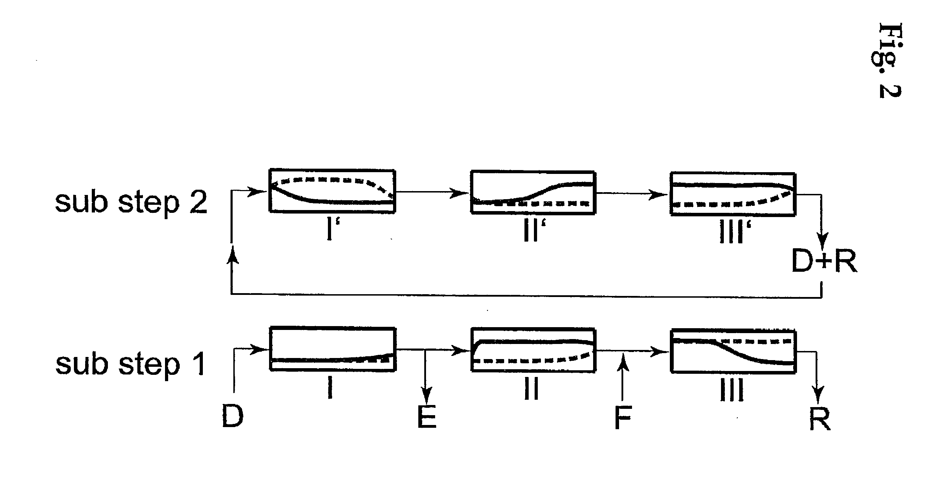

**Fig. 2** schematically represents the 3C-ISMB method according to the invention. The 3C-ISMB unit comprises three sections (I to III, I' to III"') and the switch period is divided into two substeps (sub step 1, sub step 2). In sub step 1, a desorbent (D) enters upstream of the first section (I) and a feed mixture F comprising at least a solvent and two solutes enters upstream of the third section (III). A first outlet stream (E) comprising at least desorbent D and one solute, preferably the more retained solute, is withdrawn downstream of the first section (I). A second outlet stream (R) comprising at least desorbent and a further solute, preferably the less retained solute, is withdrawn downstream of the third section (III). In sub step two all inlet and outlet ports are closed and a fluid stream is circulated through all three sections (I' to III') in a closed loop, thus at least one solute is partially recycled from section III' to section I'. Exemplary for the case of a binary separation, the internal concentration profiles of the more retained solute (continuous line) and the less retained solute (dotted line) are schematically depicted.

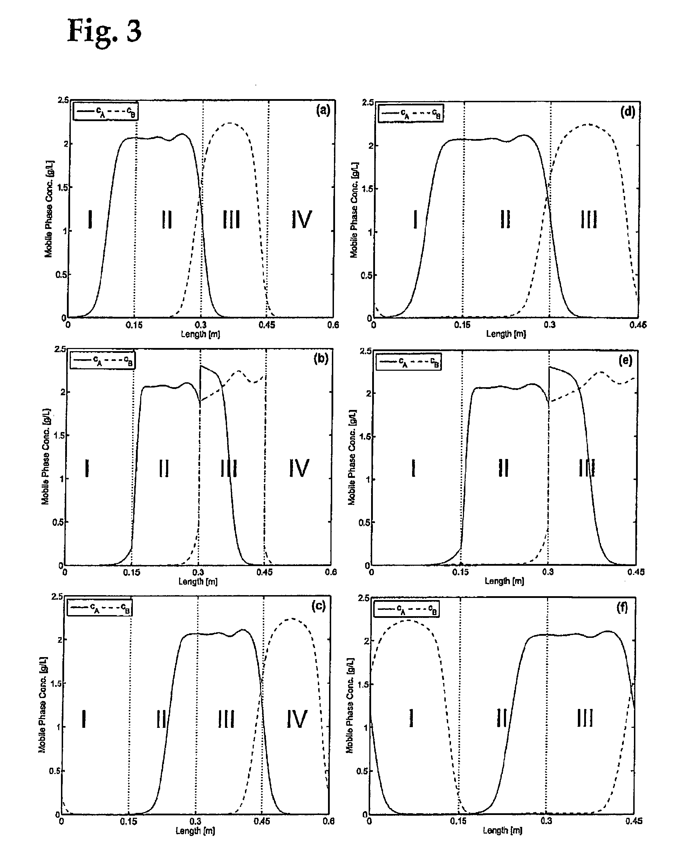

**Fig. 3** shows six diagrams, which represent a comparison of the internal concentration profiles of the known I-SMB to the method according to the invention. (a) I-SMB at the beginning of the switching time, (b) I-SMB at the end of sub step 1, (c) I-SMB at the end of sub step 2, (d) the method according to the invention (3C-ISMB) at the beginning of the switching time, (e) 3C-ISMB at the end of sub step 1, (f) 3C-ISMB at the end of sub step 2.

Furthermore, Fig. 3 shows that with the method according to the invention one section, i.e. at least one column, can be saved.

In all six diagrams the $\gamma$-axis represents the concentration of the more retained solute ($c_A$) and the less retained solute ($c_B$) in the mobile phase in [g/L]. In diagrams (a) to (c), the x-axis is divided into four sections representing the known I-SMB with one column per section, i.e. I-SMB in 1-1-1-1 configuration. In diagrams (d) to (f) the x-axis is divided into three sections representing the method according to the invention with one column per section, i.e. 3C-ISMB in 1-1-1 configuration. Both methods, the known I-SMB method and the method according to the invention, are operated under identical operating conditions in terms of flow rates and switch time, however without section IV in the method according to the invention.

Diagrams (a) and (d) show the internal concentration profile of the more retained solute ($c_A$) and the less retained solute ($c_B$) at the beginning of sub-step 1 for the known I-SMB (Fig. 3(a)) and the method according to the invention (Fig. 3(b)). The former method has four sections (I-IV), however only three section (I-III) are in use during sub step 1, whereas the 3C-ISMB method only has three sections (I-III).

Diagrams (b) and (e) show the internal concentration profiles at the end of sub-step 1 for both methods. It can be seen that section I is almost completely regenerated in both methods; i.e. the concentrations of both solutes ($c_A$ and $c_B$) have approached zero. This fact is exploited in the method according to the invention which uses the almost regenerated section I in the following sub step 2 to adsorb the less retained solute ($c_B$) whereas the known I-SMB employs a further section (IV) to perform this task.

Therefore diagram (c) representing conventional I-SMB at the end of sub step two shows a regenerated section I, whereas section I of the method according to the invention contains the less retained solute ($c_B$) (see diagram (f)). Thus, it can be concluded that the advantages of the method according to the invention resides in the full exploitation of the stationary phase whilst in the known I-SMB a fourth of it is hardly being used.

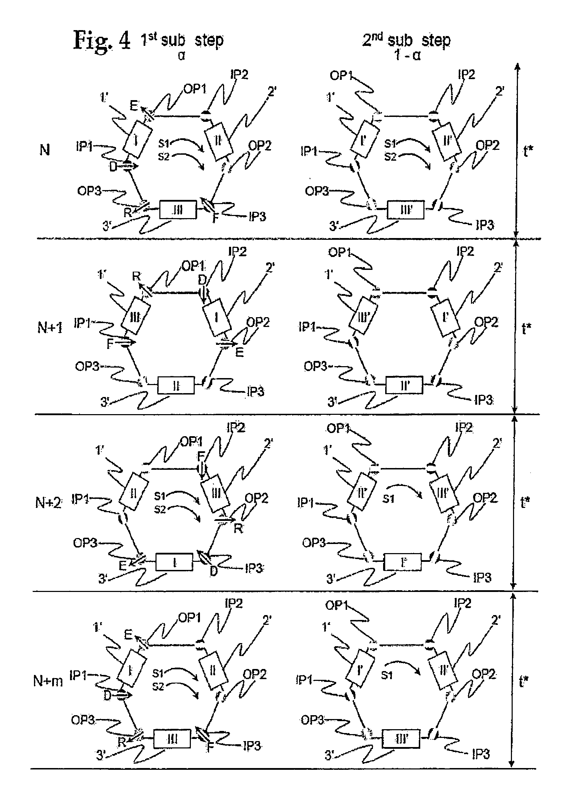

**Fig. 4** schematically shows a sequence of the method according to the invention. N stands for the first basic step. N + 1 to N + m are the following basic steps. Each basic step is performed in a predetermined time period, the switching time period t* and is divided into a first and a second sub step. The two sub steps are carried out sequentially according to a predetermined step ratio, a sub interval of the switching time period t*, i.e. sub step one has a duration of $\alpha$ t* and sub step two has a duration of $(1-\alpha)$t*. I to III represent the three sections of the method according to the invention (3C-ISMB) during sub step 1, whilst I' to III' represent the three sections during sub step 2. In a preferred embodiment each section has an inlet port (IP1 to IP3) and an outlet port (OP1 to OP3). In Fig. 4 the active ports used for supplying a feed mixture stream F and a desorbent stream D as well as for discharging outlet streams R and E are marked with arrows. In a preferred embodiment each section comprises one column 1' to 3'. In the preferred embodiment according to Fig. 4, basic step N, sub step one the inlet ports IP1, IP3 and outlet ports OP1, OP3 are open. S1 represents the direction of a fluid flow. The desorbent D enters upstream of the first section I through IP1, the feed mixture F comprising of at least a solvent and two solutes enters upstream of the third section III through IP3, a first outlet stream (E) comprising the desorbent D and at least one solute is withdrawn downstream of the first section I through OP1, a second outlet stream (R) comprising the desorbent D and at least a further solute is withdrawn downstream of the third section III through OP3. In sub step two all inlet ports (IP1 to IP3) and outlet ports (OP1 to OP3) are closed and a fluid stream is circulated through three sections (I' to III') in a closed loop, thus at least one solute is partially recycled from section III' to section I'

As indicated with S2, between basic step N and basic step N+1, a position of feed mixture F and desorbent D supply and the position of withdrawal of outlet streams are switched in direction of the fluid flow by one inlet port (IP1 to IP2 and IP3 to IP1) and one outlet port (OP1 to OP2 and OP3 to OP1), respectively. When switching the position of the inlet and outlet ports a movement of the stationary phase, in a counter current-direction is simulated.

In basic step N+1, sub step one the desorbent D enters upstream of the first section I through IP1+1 shown as IP2, the feed mixture F consisting of at least a solvent and two solutes enters upstream of the third section III through IP3+1 shown as IP1, a first outlet stream (E) comprising the desorbent D and at least one solute is withdrawn downstream of the first section I through OP1+1 shown as OP2, a second outlet stream (R) comprising the desorbent D and at least a further solute is withdrawn downstream of the third section III through OP3+1 shown as OP1. In sub step two the inlet ports (IP1 to IP3) and outlet ports (OP1 to OP3) are closed and a fluid stream is circulated through three sections (I' to III') in a closed loop, thus at least one solute is partially recycled from section III' to section I'. In basic step N+2 and N+m the switching and execution of basic steps is correspondingly repeated.

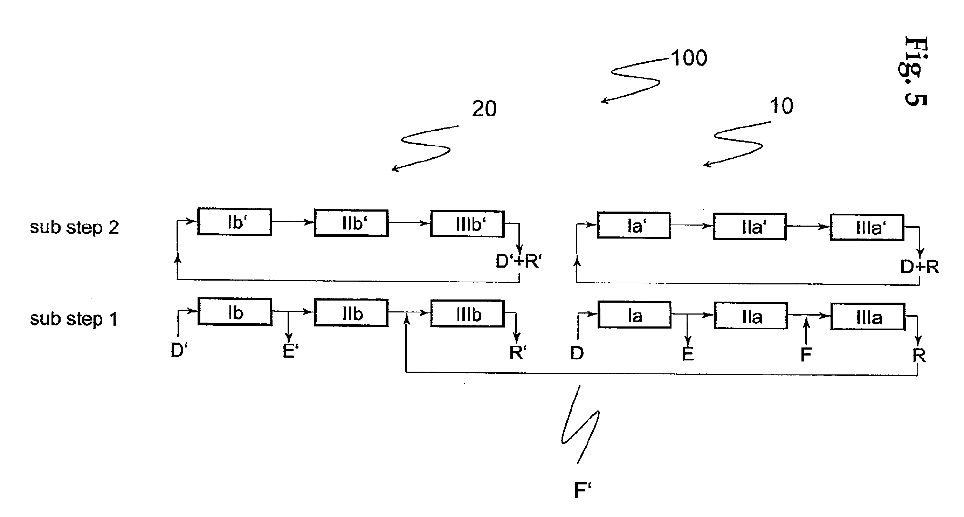

**Fig. 5** shows a process scheme according to invention for separating a feed mixture comprising more than two solutes. The figure shows a 3C-ISMB cascade (100) using direct coupling of a first stage (10) with sections Ia, IIa, IIIa in sub step one and sections Ia' to IIIa' in sub step two and a second stage (20) comprising sections Ib, IIb, IIIb in sub step one and sections Ib' to IIIb' in sub step two. In the first stage (10), sub step one, the feed mixture F, comprising at least a solvent and three solutes is fed upstream of section IIIa, the desorbent D enters upstream of the first section Ia. A first outlet stream (E) comprising the desorbent D and at least one solute is withdrawn downstream of section Ia. A second outlet stream (R) comprising the desorbent D and at least two further solutes is withdrawn downstream of section IIIa and directly used as feed mixture (F') to the second stage (20). In sub step two all inlet and outlet ports are closed (not shown in Fig. 5), and a fluid stream is circulated through all three sections (Ia'to IIIa') in a closed loop, thus at least two solutes are partially recycled from section IIIa' to section Ia'.

In the second stage (20), sub step one, the stream R=F', comprising at least the desorbent and two solutes is fed upstream of section IIIb, the desorbent (D') enters upstream of section Ib. A first outlet stream (E') comprising at least the desorbent D and one solute is withdrawn downstream of section Ib. A further outlet stream (R') comprising at least the desorbent D and a further solute is withdrawn downstream of section IIIb. In sub step two all inlet and outlet ports are closed (not shown in Fig. 5), and a fluid stream is circulated through all three sections (Ib' to IIIb') in a closed loop, thus at least one solute is partially recycled from section IIIb' to section Ib'.

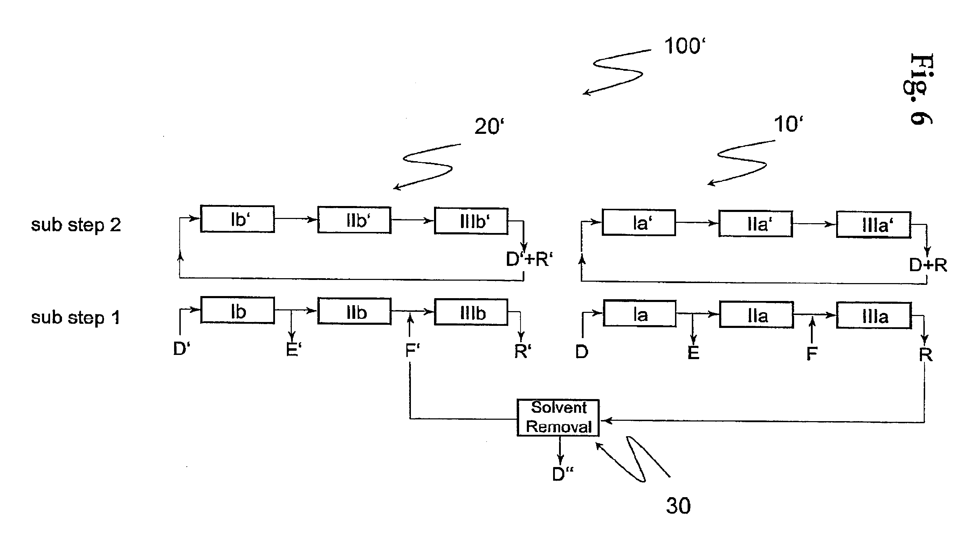

**Fig. 6** shows a process scheme according to invention for separating a feed mixture mixture comprising more than two solutes. The figure shows a 3C-ISMB cascade (100') using coupling of a first stage (10') with sections Ia, IIa, IIIa in sub step one and sections Ia' to IIIa' in sub step two to a second stage (20') comprising sections Ib, IIb, IIIb in sub step one and sections Ib' to IIIb' in sub step two via a solvent removal unit (30). In the first stage (10'), sub step one, the feed mixture F, comprising at least a solvent and three solutes is fed upstream of section IIIa, the desorbent D enters upstream of the first section Ia. A first outlet stream (E) comprising the desorbent D and at least one solute is withdrawn downstream of section Ia. A second outlet stream (R) comprising the desorbent D and at least two further solutes is withdrawn downstream of section IIIa and fed to a solvent removal unit (30). In sub step two all inlet and outlet ports are closed (not shown in Fig. 6), and a fluid stream is circulated through all three sections (Ia' to IIIa') in a closed loop, thus at least two solutes are partially recycled from section IIIa' to section Ia'.

In the solvent removal unit 30 the desorbent is at least partially removed from the second outlet stream R. A stream D" consisting of at least desorbent and a stream F' comprising the desorbent and at least two solutes are leaving the solvent removal unit 30.

In the second stage (20'), sub step one, the stream F', comprising at least one solvent and two solutes is fed upstream of section IIIb, the desorbent (D') enters upstream of section Ib. A first outlet stream (E') comprising the desorbent and at least one solute is withdrawn downstream of section Ib. A further outlet stream (R') comprising the desorbent and at least one further solute is withdrawn downstream of section IIIb. In sub step two all inlet and outlet ports are closed (not shown in Fig. 6), and a fluid stream is circulated through all three sections (Ib' to IIIb') in a closed loop, thus at least one solute is partially recycled from section IIIb' to section Ib'.

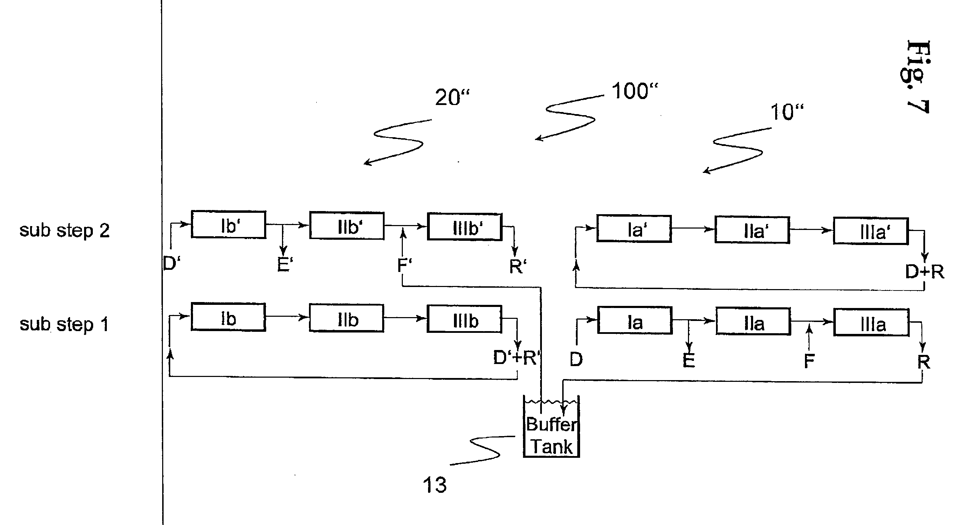

**Fig. 7** shows a process scheme according to invention for separating a feed mixture F comprising more than two solutes. The figure shows a 3C-ISMB cascade (100") using coupling of a first stage (10") with sections Ia, IIa, IIIa in sub step one and sections Ia' to IIIa' in sub step two to a second stage (20") comprising sections Ib' to IIIb' in sub step one and sections Ib, IIb, IIIb in sub step two via a buffer tank (13). In the first stage (10"), sub step one, the feed mixture F, comprising at least a solvent and three solutes is fed upstream of section IIIa, the desorbent D enters upstream of the first section Ia. A first outlet stream (E) comprising the desorbent and at least one solute is withdrawn downstream of section Ia. A second outlet stream (R) comprising the desorbent and at least two further solutes is withdrawn downstream of section IIIa and is temporarily stored in a buffer tank (13). In sub step two all inlet and outlet ports are closed (not shown in Fig. 7), and a fluid stream is circulated through all three sections (Ia' to IIIa') in a closed loop, thus at least two solutes are partially recycled from section IIIa' to section Ia'.

In the second stage (20"), a sequence of feeding and recycling is reversed with respect to the first stage (10") in order to allow differing flow rates for streams R and F'. Thus in the second stage (20"), sub step one, all inlet and outlet ports are closed (not shown in Fig. 7), and a fluid stream is circulated through all three sections (Ib' to IIIb') in a closed loop, thus at least one solute is partially recycled from section IIIb' to section Ib'. In sub step two the stream F', comprising at least a solvent and two solutes is fed from the buffer tank (13) to the second stage (20") upstream of section IIIb, the desorbent (D') enters upstream of section Ib. A first outlet stream (E') comprising the desorbent and at least one solute is withdrawn downstream of section Ib. A further outlet stream (R') comprising the desorbent and at least one solute is withdrawn downstream of section IIIb.

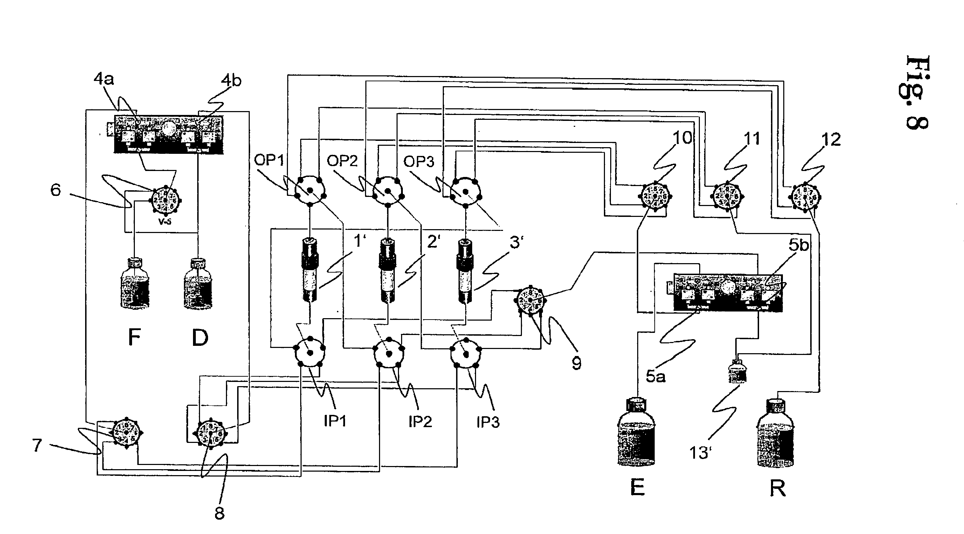

**Fig. 8** shows the flow sheet of the laboratory experimental set up comprising four dual piston pumps 4a, 4b, 5a, 5b, three chromatographic columns 1', 2', 3', each equipped with an inlet and an outlet port (IP1 to IP3 and OP1 to OP3) which are connected to six multi-position valves 7, 8, 9, 10, 11,12. An additional multi-position valve 6 is used to switch from feed mixture fixture to pure desorbent in order to clean the unit after shutdown. The multi-position valves 7, 8, 9, 10, 11 and 12 are needed to control the port switching according to Fig. 3 within the predetermined switching time period t*. Thus, the outlets of three multi-position valves (7, 8, 9) are connected to each inlet port (IP1 to IP3) and the inlets of another three multi-position valve (10, 11, 12) are connected to each outlet port (OP1 to OP3). More specifically, in sub step one, the feed mixture F consisting of at least a solvent and two solutes is fed to the unit using pump 4a and its entrance position is guided via valve 7; the desorbent is fed with pump 4b and its entrance position is guided via valve 8. The position of withdrawal of the first outlet stream E consisting of desorbent and at least one solute is guided by valve 10 and facilitated by pump 5a. The position of withdrawal of the second outlet stream R consisting of desorbent and at least one further solute is guided by valve 12 and does not require a pump. In sub step two the circulation of a fluid stream through three columns (1' to 3') in a closed loop is facilitated by pump 5b and guided by valves 9 and 11. A laboratory scaled buffer tank 13' with a volume of approximately 1 ml between the outlet of valve 11 and the sucking side of pump 5b facilitates removal of trapped air bubbles in the circulated fluid stream

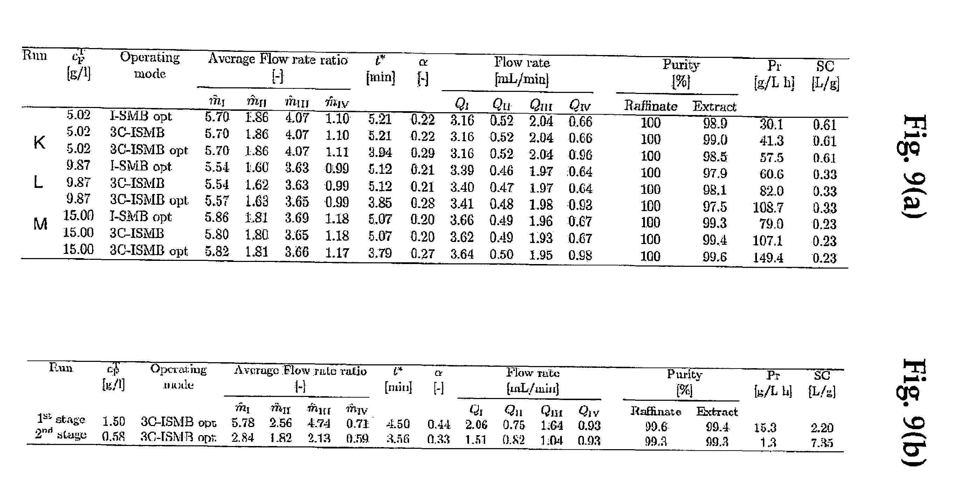

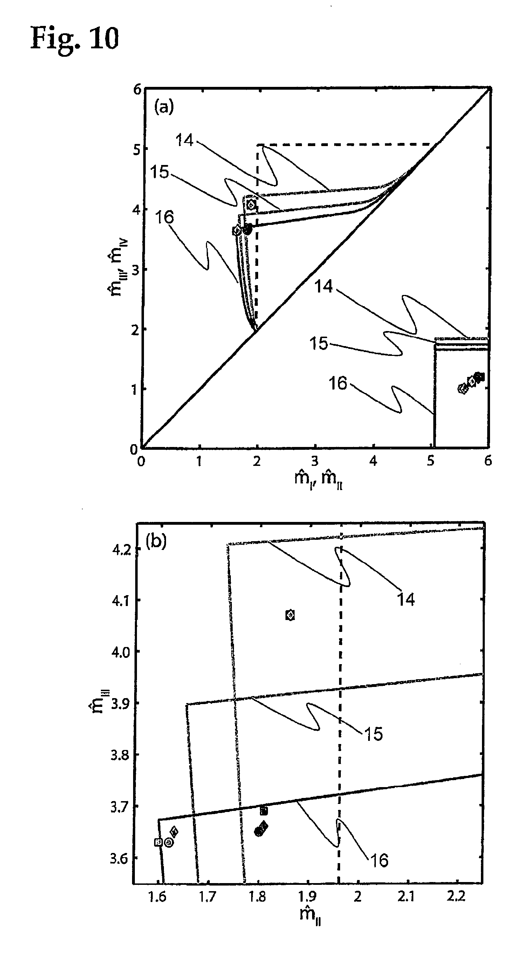

**Fig. 9 (a)** shows the operating conditions and separation performance of experimental runs K to M concerning I-SMB known from the state of the art and the 3C-ISM according to the invention. The positions of the operating points are shown in an operating parameter plane in Fig. 10 (a), (b).

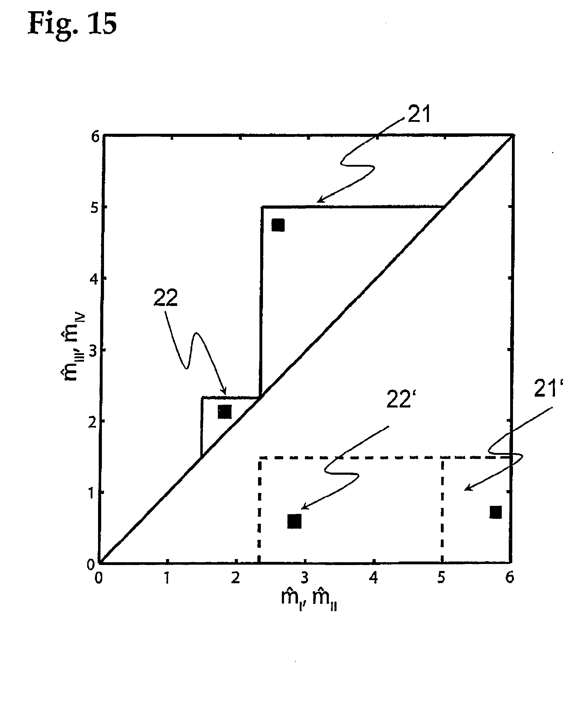

**Fig. 9 (b)** shows the operating conditions and separation performance of one experimental run concerning a 3C-ISMB cascade, which is a two stage process for the separation of ternary mixtures. The positions of the operating points are shown in an operating parameter plane in Fig. 15.

**Fig. 10** shows the operating points of experimental runs K to M in the operating parameter planes, i.e. in the $(m_{II}/m_{III})$- and in the $(m_I/m_{IV})$-plane, (a) in the full operating parameter plane, (b) zoomed on the relevant area in the $(m_{II}/m_{III})$-plane : The solid lines represent the regions of complete separation and regeneration for the total feed mixture concentration of 5 g/l (14), 10 g/l (15) and 15 g/l (16), respectively. The symbols stand for the mode of operation at the respective feed mixture concentration, namely □ for I-SMB optimized, o for 3C-ISMB non-optimized and ◊ for 3C-ISMB optimized. The dashed lines would apply in a linear case, i.e. for highly diluted feed mixture concentration.

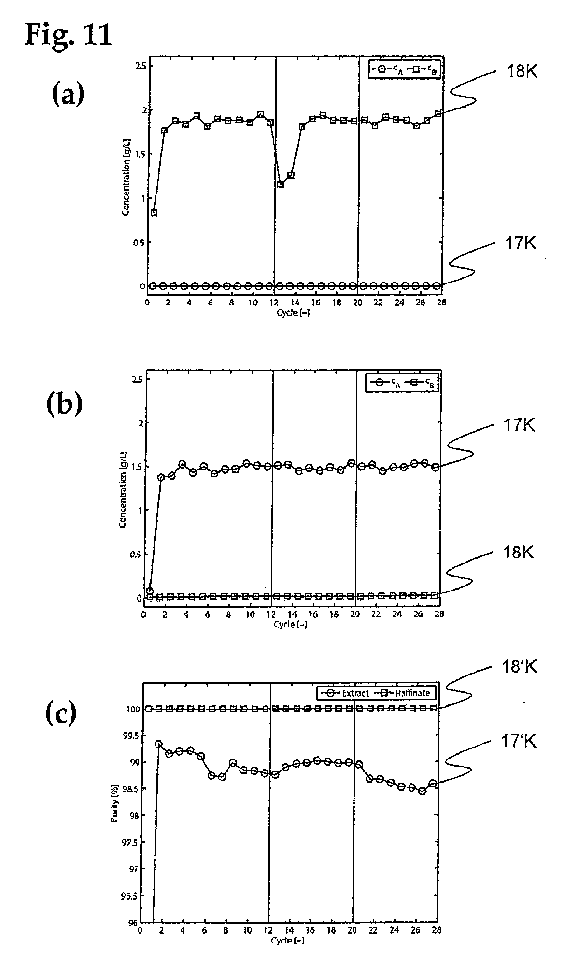

**Fig. 11 (a), (b)** shows the concentrations of the more retained (17K) and the less retained solute (18K) in the outlet streams R (Fig. 11 (a)) and E (Fig. 11 (b)) versus the cycle number, a cycle being defined as three basic steps N to N+2, for experimental run K. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMBmode according to the invention.

**Fig. 11 (c)** shows the purities of the two outlet streams, i.e. the extract stream E (17'K) and the raffinate stream R (18'K) versus the cycle number for experimental run K. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMB mode according to the invention.

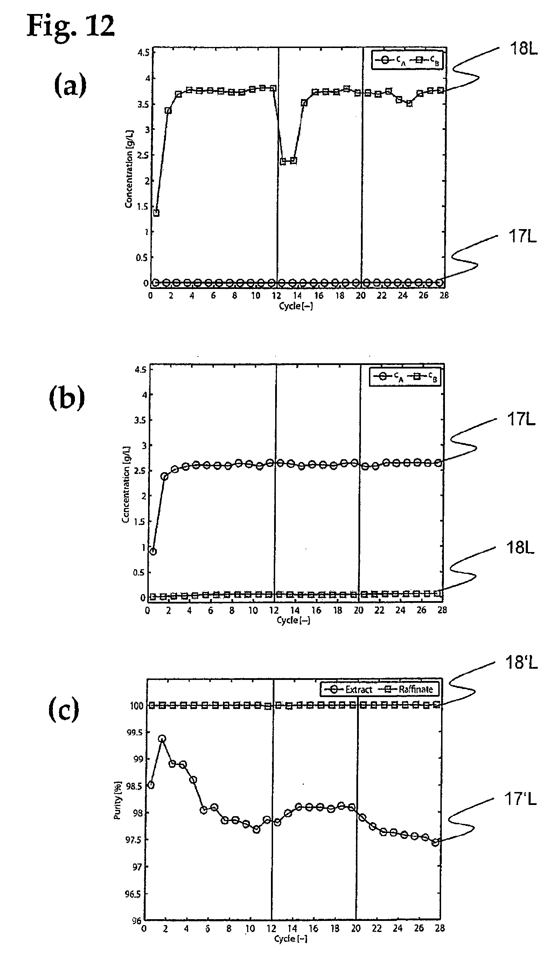

**Fig. 12 (a), (b)** shows the concentrations of the more retained (17L) and the less retained solute (18L) in the outlet streams R (Fig. 12 (a)) and E (Fig. 12 (b)) versus the cycle number, a cycle being defined as three basic steps N to N+2, for experimental run L. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMS mode according to the invention.

**Fig. 12 (c)** shows the purities of the two outlet streams, i.e. the extract stream E (17'L) and the raffinate stream R (18'L) versus the cycle number for experimental run L. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMB mode according to the invention.

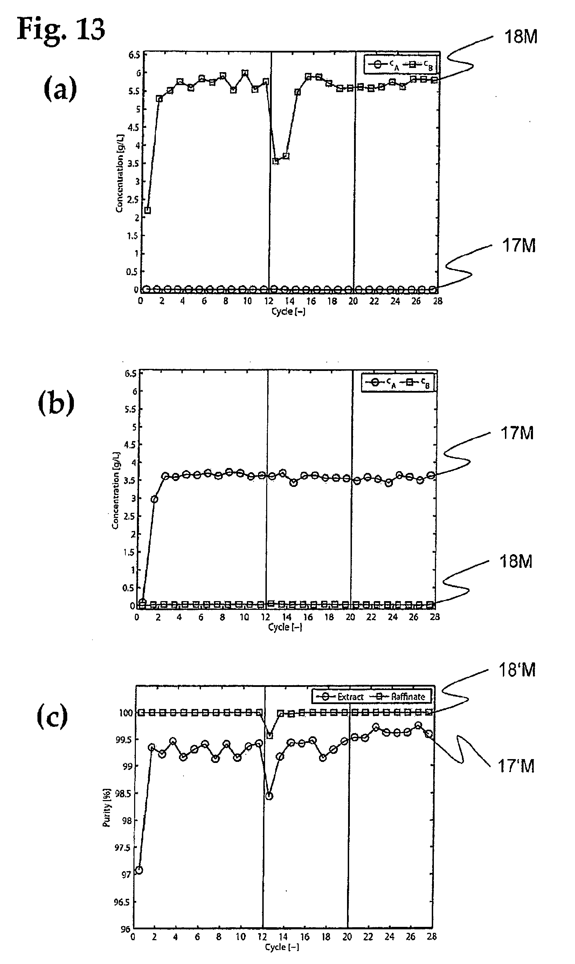

**Fig. 13 (a), (b)** shows the concentrations of the more retained (17M) and the less retained solute (18M) in the outlet streams R (Fig. 13 (a)) and E (Fig. 13 (b)) versus the cycle number, a cycle being defined as three basic steps N to N+2, for experimental run M. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMBmode according to the invention.

**Fig. 13 (c)** shows the purities of the two outlet streams, i.e. the extract stream E (17'M) and the raffinate stream R (18'M) versus the cycle number for experimental run M. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMBmode according to the invention.

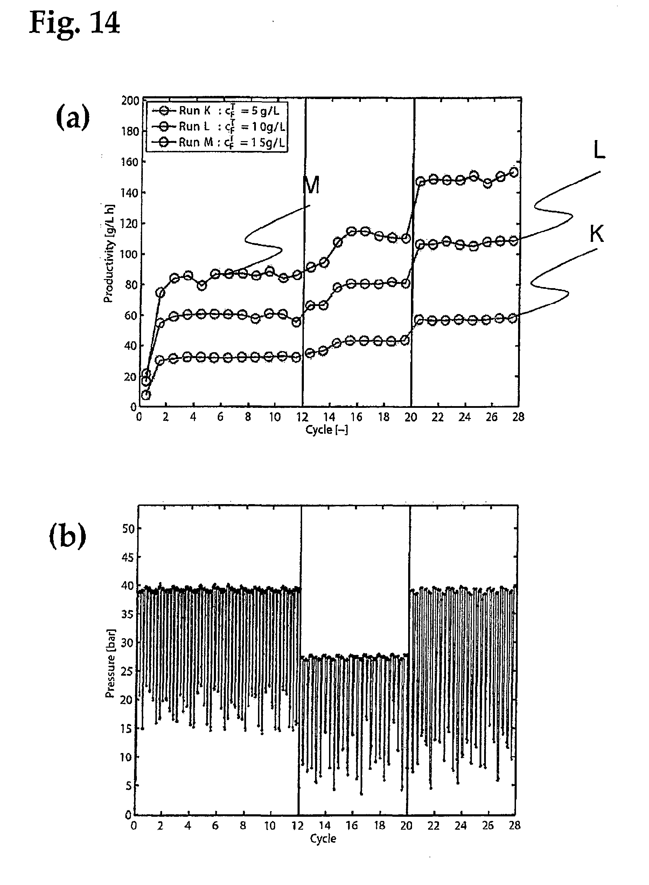

**Fig. 14 (a)** shows the productivity of the three experimental runs K, L, M. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMBmode according to the invention.

**Fig. 14 (b)** shows the pressure drop versus the cycle number during the experimental run K. The vertical lines indicate a change in operating conditions; more precisely, the experimental unit is operated in optimized 4 columns I-SMB mode according to the state of the art from the begin until cycle 12, afterwards it is operated for 8 cycles (cycles 13 to 20) in 3C-ISMB mode according to the invention without changing flow rates and switching times (non-optimized 3C-ISMB). Finally the last 8 cycles (cycles 21 to 28) are performed in optimized 3C-ISMBmode according to the invention.

**Fig. 15** shows operating points for a 3C-ISMB cascade in the $(m_{II}/m_{III})$- and $(m_I/m_{IV})$-plane, respectively. The boundaries (21) and operating points (21') represent the first stages, whereas the boundaries (22) and operating points (22') represent the second stage.

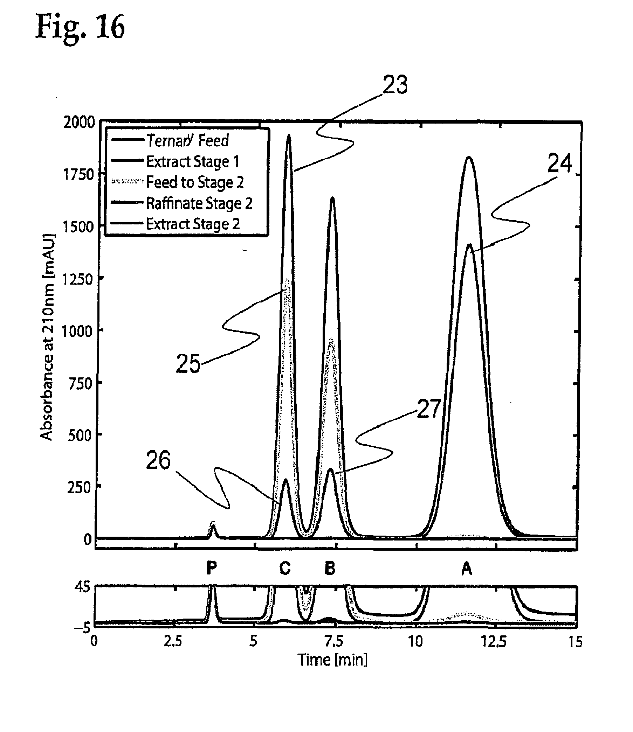

**Fig. 16** shows a chromatogram of a ternary feed mixture (23) and the outlet streams at steady state of the first stage (24, 25) as well as of the second stage (26, 27) of a 3C-ISMB cascade. The second outlet stream of stage one (25) consisting of the desorbent and two weak retained solutes (B, C) was directly used as feed mixture to the second stage. On the bottom of the figure a zoom to the base line is shown in order to illustrate the high purity of the three product streams (24), (26), (27). The capital letters in Fig. 16 stand for ( )-Tröger's Base (A), ($\pm$)-$\gamma$-Phenyl-$\gamma$-butyrolactone (B and C) and the injection peak (P).

<u>Example binary separation</u>

An experimental study for the separation of a binary mixture compares the known I-SMB with the 3C-ISMB method according to the invention. Three experimental runs K, L, M under non-linear chromatographic conditions are done, applying total solute concentration in the feed mixture of 5 g/l (run K), 10 g/l (run L) and 15 g/l (run M). The system studied is a separation of racemic Tröger's Base (Sigma-Aldrich Chemie GmbH, Buchs, Switzerland) in pure ethanol (analytical grade, Scharlab S.L., Sentmenat, Spain) on Chiralpak AD™ (Chiral Technologies Europe, Illkirch, France). The Chiralpak AD™ stainless steel columns (15 cm × 0.46 cm, 20 m particle size) are prepacked by the manufacturer. The extract and raffinate streams are analyzed on a Dionex Ultimate 3000 HPLC unit (Sunnyvale, CA, USA). An overall void fraction *, of each column 1' to 4' was determined by injecting 1,3,5-tris-tert-butylbenzene (Sigma-Aldrich Chemie GmbH, Buchs, Switzerland), which is considered to be non-retained, according to the following equation:

$$\epsilon^* = \frac{t_0 Q}{V}$$

V is the column volume, Q is the applied flow rate and $t_0$ is the residence time of a non-retained species.

The model system for the experimental study has been studied previously by Katsuo et al. "Intermittent simulated moving bed chromatography: 2. Separation of Tröger's base enantiomers", J. Chrom. A 1217 (18) (2010) 3067-3075 and S. Katsuo, et al. "Intermittent simulated moving bed chromatography: 3. Separation of Tröger's base enantiomers under nonlinear conditions", J. Chrom. A 1218 (52) (2011) 9345-9352.

Katsuo et al. found that the system is subject to a Bi-Langmuir adsorption isotherm which is defined as:

$$n_i = \frac{a_{i,1} c_i}{1 + b_{A,1} c_A - b_{B,1} c_B} + \frac{a_{i,2} c_i}{1 + b_{A,2} c_A + b_{B,2} c_B} \qquad (i = A, B)$$

The system characteristics are summarized in the following table, wherein A is the cross-section area of one column, L the length of one column, * is the overall void fraction, $P_{max}$ is the maximum allowable pressure drop along one column. The parameters $a_{i,1}$, $b_{i,1}$, $a_{i,2}$ and $b_{i,2}$ describe the adsorption characteristics of the two solutes to be separated according to the Bi-Langmuir adsorption isotherm.

| Column | |
|---|---|
| A [cm$^2$] | 0.166 |
| L [cm] | 15 |

(continued)

| Column | | |
|---|---|---|
| $\epsilon^*$ [-] | 0.68 | |
| $\Delta P_{max}$ [bar] | 40 | |
| | Component | |
| Bi-Langmuir Isotherm | (+)-Tröger's Base | (-)-Tröger's Base |
| $a_{i,1}$ [-] | 1.64 | 4.06 |
| $b_{i,1}$ [L/g] | 0.0132 | 0.0107 |
| $a_{i,2}$ [-] | 0.32 | 1.00 |
| $b_{i,2}$ [L/g] | 0.136 | 0.601 |

Each experiment was carried out in three steps: (a) first the experimental set up was operated according to the known conventional I-SMB with four sections (see Table 9(a) operating mode I-SMB$_{opt}$) (b) second the experimental set up was operated as 3C-ISMB, i.e. one column was disconnected so as to enable the recycling of component B from section III' to section I' in sub step two. However, the flow rates and switching times were kept constant with respect to (a), thus the reduced pressure drop along the column train due to the reduced number of columns was not fully exploited (see Table 9(a) operating mode 3C-ISMB). (c) Third the experimental set up was operated as 3C-ISMB accounting for the reduced number of columns. Thus the flow rate through all three sections in sub step two ($Q_{IV}$) where the less retained component was recycled from section III' to section I' was increased resulting in a smaller switch time and an increase in productivity (see Table 9(a) operating mode 3C-ISMB$_{opt}$).

The experimental set-up for both the I-SMB and the 3C-ISMB process is based on a modified ÄKTA™ explorer 100 system (GE Healthcare Europe GmbH, Freiburg, Germany). The program controlling all the devices is based on the standard UNICORN™ software (GE Healthcare Europe GmbH, Freiburg, Germany). The experiments were carried out in a 1-1-1-1 (I-SMB), respectively a 1-1-1 (3C-ISMB), closed loop configuration. For the known I-SMB process four sections with one column in each section are therefore in use. The switching from I-SMB to 3C-ISMB is carried out by removing the fourth section, respectively the fourth column, which is easily achieved by removing a tubing connecting an outlet port of the fourth column to inlet port of the first column and connecting the outlet port of the third column to the inlet port of the first column instead of fourth column. The UNICORN™-code needs to be altered in order to take into account the reduced number of sections. The results of this experimental study are given in Fig. 9(a).

The operating point of conventional SMB processes is usually expressed in terms of dimensionless flow rate ratios m$_j$ which are defined as:

$$m_j = \frac{Q_j t^* - V\epsilon^*}{V(1 - \epsilon^*)}$$

where index j represents the section j, Q$_j$ is the volumetric flow rate in a section j, t* is the switching time, V the column volume and * the overall void fraction. Under linear conditions, a region of complete separation in the (m$_{II}$,m$_{III}$)-plane and a region of complete regeneration of stationary and mobile phase read in the in the (m$_I$,m$_{IV}$)-plane can be de fined as:

$$H_A \leq m_I$$

$$H_B \leq m_{II} \leq H_A$$

$$H_B \leq m_{III} \leq H_A$$
$$m_{IV} \leq H_B$$

where H$_A$ is the Henry constant of solute A, H$_B$ is the Henry constants of solute H$_B$ and m$_I$ to m$_{IV}$ are dimensionless flow rate ratios in sections I to IV. According to the so-called triangle theory H$_B$ m$_{II}$ H$_A$ and H$_B$ m$_{III}$ H$_A$ define a triangular region of complete separation in a (m$_{II}$,m$_{III}$)-plane, whereas H$_A$ m$_I$ and m$_{IV}$ H$_B$ define a rectangular region of complete regeneration in the (m$_I$,m$_{IV}$)-plane.

Under non-linear chromatographic conditions, the triangle gets distorted, but explicit equations for its boundaries are available which makes the theory still easy to use. In fact, the SMB practitioner normally chooses an operating point in the $(m_{II}, m_{III})$- and the $(m_I, m_{IV})$-plane, afterward the switching time is fixed according to maximum pressure drop considerations. Finally the four internal flow rates can be calculated from the m-values and the switching time. This easy to use and well-known design tool was extended to I-SMB by introducing average flow rates defined as

$$\hat{Q}_j = \alpha Q_j + (1 - \alpha) Q_{IV} \qquad (j = I, II, III)$$

$$\hat{Q}_{IV} = (1 - \alpha) Q_{IV}$$

and redefining the dimensionless flow rate ratios as:

$$m_j = \frac{\hat{Q}_j t^* - V\epsilon^*}{V(1 - \epsilon^*)}$$

The optimal switching time t* and step ratio α for the known I-SMB can be calculated as follows:

$$t^*_{I-SMB} = \frac{\phi L^2}{\Delta P_{max}} \sum_{j=I}^{IV} n_j \left( m_j (1 - \epsilon^*) + \epsilon^* \right)$$

$$\alpha_{I-SMB} = \frac{\sum_{j=I}^{III} n_j (m_j - m_{IV})(1 - \epsilon^*)}{\sum_{j=I}^{IV} n_j \left( m_j (1 - \epsilon^*) + \epsilon^* \right)}$$

where $n_j$ is the number of columns in section j, is a pressure drop factor and L is the column length, $P_{max}$ is maximum allowable pressure drop along the columns, * is the overall void fraction, mj the dimensionless flow rate ratios in section j, $m_I$ to $m_{IV}$ the dimensionless flow rate ratios in section I to IV.

The experimental study starts in the I-SMB mode. Afterwards a switch to the 3C-ISMB method according to the invention is performed without changing the operating conditions in terms of flow rates and switching time. However, since for the 3C-ISMB method t* and α are optimally chosen according to equations

$$t^*_{3C-ISMB} = \frac{\phi L^2}{\Delta P_{max}} \sum_{j=I}^{III} n_j \left( m_j (1 - \epsilon^*) + \epsilon^* \right)$$

$$\alpha_{3C-ISMB} = \frac{\sum_{j=I}^{III} n_j (m_j - m_{IV})(1 - \epsilon^*)}{\sum_{j=I}^{III} n_j \left( m_j (1 - \epsilon^*) + \epsilon^* \right)}$$

which take the smaller number of columns and the resulting smaller pressure drop along these columns into account. Therefore the second mode of operation where 3C-ISMB is run with the same operating conditions in terms of flow rates and switching time as the I-SMB mode, the operating conditions are not optimal as the maximum allowable pressure drop in sub step two is not fully exploited. In the third mode of operation the smaller pressure drop along the reduced number of columns in sub step two is taken into account, thus the flow rate $Q_{IV}$ is increased which allows for increasing α and decreasing t* according to the equations above.

The operating points for all experimental runs K to L and all modes of operation, i.e. I-SMB$_{opt}$, 3C-ISMB and 3C-ISMB$_{opt}$ are shown in fig. 10 and summarized in table 9(a).

Example three fraction separation

The experimental set-up for a 3C-ISMB cascade for the separation of a feed mixture comprising at least three solutes is based on a modified ÄKTA™ explorer 100 system (GE Healthcare Europe GmbH, Freiburg, Germany). The program controlling all the devices is based on the standard UNICORN™ software (GE Healthcare Europe GmbH, Freiburg, Germany). The experiments were carried out in a 1-1-1 (3C-ISMB with one column per section) closed loop configuration. A model system is prepared by dissolving 100.3 mg of a (-)-Tröger's Base (solute A) and 200.2 mg γ-Phenyl-γ-butyrolactone racemate (solutes B and C) in 157.98 g ethanol, i.e. the concentration of all three solutes was 0.5 g/l. The separation was carried out on Chiralpak AD™ stainless steel columns (15 cm × 0.46 cm, 20 m particle size) which were prepacked by the manufacturer. The product streams are analyzed on a Dionex Ultimate3000 HPLC unit (Sunnyvale, CA, USA). The overall void fraction, $\epsilon^*$, of each column was determined by injecting 1,3,5-tris-tert-butylbenzene (Sigma-Aldrich Chemie GmbH, Buchs, Switzerland), which is considered to be non-retained, according to the following equation:

$$\epsilon^* = \frac{t_0 Q}{V}$$

where V is the column volume, Q is the applied flow rate and $t_0$ is the residence time of a non-retained species.

The Henry's constants of the three solutes, i.e. γ-Phenyl-γ-butyrolactone and (-)- Tröger's base, were determined by measuring the retention time of a diluted pulse injection according to the relationship:

$$H_{\mathrm{i}} = \frac{\epsilon^*}{1 - \epsilon^*} \frac{t_{\mathrm{R,i}} - t_0}{t_0} \qquad (\mathrm{i} = \mathrm{A}, \mathrm{B}, \mathrm{C})$$

where $H_{\mathrm{i}}$ is the Henry's constant of solute i and $t_{\mathrm{R;i}}$ is the retention time of solute i (i=A,B,C). It is further noted that $t_0$ and $t_{\mathrm{R;i}}$ are corrected with a dead time of the HPLC unit. All experiments are carried out at T = 23 ± 1°C. The system characteristics are reported in the table below.

| Column | | | |
|---|---|---|---|
| A [cm²] | 0.166 | | |
| L [cm] | 15 | | |
| $\epsilon^*$[-] | 0.68 | | |
| $\Delta P_{\mathrm{max}}$[bar] | 40 | | |
| | Component | | |
| Linear isotherm | (±)-γ-Phenyl-γ-butyrolactone | | (-)-Trögers's Base |
| $H_{\mathrm{i}}$ | 1.48 | 2.33 | 5.00 |

where A is the cross-section area of one column, L the length of one column, * is the overall void fraction, $P_{\mathrm{max}}$ is the maximum allowable pressure drop along one column.

The three-fraction separation was carried out sequentially, therefore solute A is separated from components B and C in the first stage, whereas components B and C are separated in the second stage. Both stages are designed in the frame of triangle theory using the following definition for the average dimensionless flow rate ratios $m_{\mathrm{j}}$:

$$m_{\mathrm{j}} = \frac{\hat{Q}_{\mathrm{j}} t^* - V \epsilon^* - V_{\mathrm{D}}}{V (1 - \epsilon^*)}$$

which accounts for the extra-column dead volume and where Qj are defined as:

$$\hat{Q}_{\mathrm{j}} = \alpha Q_{\mathrm{j}} + (1 - \alpha) Q_{\mathrm{IV}} \qquad (\mathrm{j} = \mathrm{I}, \mathrm{II}, \mathrm{III})$$

$$\hat{Q}_{IV} = (1 - \alpha)Q_{IV}$$

Both stages of the 3C-ISMB cascade are designed fully independently, i.e. for both stages t* and $\alpha$ are chosen according to the minimal switching time design and the maximum pressure drop condition.

As it can be seen in Fig. 9(b) very high purities of 99.4% for the extract of the first stage (solute A) and 99.3% for the extract of the second stage (solute B) and the raffinate of the second stage (solute C) are achieved with the 3C-ISMB cascade. Particularly the high purity of the extract of the second stage (solute B), also known as intermediate solute is remarkable and a very important result since the intermediate solute (solute B) is not only the most difficult one to separate but it is also the solute of interest whenever a three-fraction separation process is carried out. Moreover, the second stage of the 3C-ISMB can be regarded as a binary separation of the enantiomers of $\gamma$-Phenyl-$\gamma$-butyrolactone, a difficult separation due to the small selectivity. Since the full adsorption isotherm of $\gamma$-Phenyl-$\gamma$-butyrolactone is not known, the study is done under linear chromatographic conditions for the sake of a simple and quick experimental design. However, linear conditions require low feed concentrations which compromise the productivity of any chromatographic process. For the SMB practitioners it is, however, obvious that this successful proof of concept study under linear conditions allows concluding that the very same principles can be applied also under non-linear conditions once the detailed adsorption characteristics of the system are determined and thus the productivity can be drastically improved.

A computer system for controlling the method according to the invention, called the 3C-ISMB, includes one or more computers, for example personal computers or servers, comprising one or more processors. The computer system comprises in a variant a data entry system and a display terminal. Furthermore, the computer system comprises various functional modules which are preferably implemented as programmed software modules. The computer program code of the software modules is stored in a computer program product, i.e. in a computer readable medium, either in memory integrated in a computer of the computer system or on a tangible data carrier, such as a CD-ROM (CD: Compact Disc, ROM: Read Only Memory), an USB-Stick (USB: Universal Serial Bus), a memory card, etc., which can be inserted into a computer of the computer system. The computer program code of the software modules controls the computer(s) of the computer system so that the computer system executes various functions according to the invention. One skilled in the art will understand, however, that, in alternative embodiments, the functional modules can be implemented fully or partly by way of hardware components.

LIST OF REFERENCE NUMERALS

| | |
|---|---|
| I, II, III, IV, I', II', III' | sections |
| Ia, IIa, IIIa, Ia', IIa', IIIa' | sections of the first stage |
| Ib, IIb, IIIb, Ib', IIb', IIIb' | sections of the second stage |
| S1 | moving direction of the fluid flow |
| S2 | moving direction of port switching |
| 1', 2', 3' | first, second, third column |
| $\alpha$, 1-$\alpha$ - | step ratio |
| D | desorbent |
| F, F' | feed mixture |
| E, R | outlet streams (extract, raffinate) |
| A, B, C | solute(s) |
| t* | switching time period |

| IP1, IP2, IP3 | inlet ports |
| OP1, OP2, OP3 | outlet ports |
| t1 | switching time period of the first stage |
| t2 | switching time period of the second stage |
| 4a, 4b, 5a, 5b | dual piston pumps |
| 6, 7, 8, 9, 10, 11, 12 | multi position valve |
| K,L,M | experimental run |
| $C_F^T$ | total concentration of solutes feed mixture |
| PR | productivity |
| SC | solvent consumption |
| 13, 13' | buffertank |
| 100, 100', 100" | 3C ISMB cascade |
| 10, 10', 10" | first stage |
| 20, 20', 20" | second stage |
| 30 | solvent removal unit |
| 14 | feed concentration 5 g/l |
| 15 | feed concentration 10 g/l |
| 16 | feed concentration 15 g/l |
| 17K-17M | concentration of component A in the outlet streams for experimental run K to M |
| 18K-18M | concentration of component B in the outlet stream for experimental run K to M |
| 17'K-17'M | purity profile of the raffinate for experimental run K to M |
| 18'K-18'M | purity profile of the extract for experimental run K to M |
| 21 | boundaries operating parameter plane first stage |
| 21' | operating point first stage |
| 22 | boundaries operating parameter plane second stage |
| 22' | operating point second stage |
| 23 | Ternary feed |
| 24 | extract stage 1 |
| 25 | feed to stage 2 |

| 26 | raffinate stage 2 |
| 27 | extract stage 2 |
| $C_i$ | fluid phase concentration of component i |
| $H_i$ | Henry constant of component i |
| L | length of the column |
| $m_j$ | flow rate ratio in section j |
| $n_j$ | number of columns in section j |
| $Q_j$ | volumetric flow rate in section j |
| $\hat{Q}_j$ | average volumetric flow rate in section j |
| V | volume of a column pressure drop factor |
| $\in^*$ | overall bed void fraction |

**Claims**

1. A method to separate a feed mixture (F) comprising at least one solvent and two solutes by an intermittent multi column chromatography process with a basic step N performed in a predetermined switching time period (t*), basic step N comprises two sub steps which are carried out sequentially according to a predetermined step ratio ($\alpha$)

    - in sub step one inlet ports (IP1, IP3) and outlet ports (OP1, OP3) are opened, a desorbent (D) enters upstream of a first section (I) through IP1, the feed mixture (F) enters upstream of a third section (III) through IP3, a first outlet stream (E) comprising the desorbent (D) and at least one solute is withdrawn downstream of the first section (I) through OP1, a second outlet stream (R) comprising the desorbent (D) and at least a further solute is withdrawn downstream of the third section (III) through OP3;
    - in sub step two inlet ports (IP1, IP2, IP3) and outlet ports (OP1, OP2, OP3) are closed, a fluid stream comprising the desorbent (D) and part of the feed mixture (F) is circulated through three sections (I' to III') in a closed loop.

2. The method according to claim 1, **characterised in that** in a basic step N+1, sub step one the inlet ports (IP1, IP2) and the outlet ports (OP1, OP2) are open, the desorbent (D) enters upstream of the first section (I) through IP2, the feed mixture (F) enters upstream of a third section (III) through IP1, a first outlet stream (E) comprising the desorbent (D) and at least one solute is withdrawn downstream of the first section (I) through OP2, a second outlet stream (R) comprising the desorbent (D) and at least a further solute is withdrawn downstream of the third section (III) through OP1.

3. The method according claim 1 and claim 2, **characterised in that** between basic step N and basic step N+1, a position of feed mixture and desorbent supply (D, F) and a position of withdrawal of outlet streams (E, R) are shifted by one inlet port (IP1 to IP3), respectively one outlet port (OP1 to OP3), in direction of a fluid flow.

4. The method of claim 1 to 3, **characterised in that** each section (I-III, I' to III') comprises several columns (1', 2', 3') preferably one column.

5. The method of claim 1 to 3, **characterised in that** the feed mixture (F) comprises two solutes.

6. The method of claim 1 to 3, **characterised in that** the feed mixture (F) comprises at least three solutes.

7. The method of claim 1 to 3, **characterised in that** the feed mixture (F) comprises more than three solutes, wherein the solutes can be grouped in two or three groups according to their chromatographic properties.

8. The method of claim 6, **characterised in that** the basic steps (N, N+1) are performed in a first stage and one outlet stream produced in the first stage enters upstream to a third section (IIIb) of a second stage as feed mixture (F').

9. The method of claim 8, **characterised in that** the desorbent (D) is at least partially removed from one outlet stream produced in the first stage before it enters upstream to a third section (IIIb) of a second stage as feed mixture (F').

10. The method of claim 8, **characterised in that** one outlet stream produced in the first stage is temporarily stored before it enters upstream to a third section (IIIb) of the second stage as the feed mixture (F').

11. The method of claim 8, **characterised in that** one outlet stream of the first stage is directly fed to the third section (IIIb) of the second stage as the feed mixture (F').

12. The method of claim 8 to 11, **characterised in that** one outlet stream produced in a first unit is fed to a second unit after the end of the first stage or is fed back to the first unit after the end of the first stage.

13. The method of claim 12, **characterised in that** the second unit has different, preferably lager dimensions than the first unit.

14. The method according claim 13, **characterised in that** the first and the second unit are connected in series.

15. the method according to claim 10, **characterised in that** the basic steps of the first stage are performed within a first switching time period (t1) and the basic steps of the second stage are performed within a second switching time period (t2), preferably t1≤t2.

16. The method of claim 11, **characterised in that** the basic steps of the first stage are performed in a first switching time period (t1) and the basic steps of the second stage are performed in a second switching time period (t2), preferably t1=t2.

17. An apparatus, which is used to perform a method according to one of the above mentioned claims, **characterised in that** the apparatus comprises a first processing unit with three columns.

18. The apparatus according to claim 17, **characterised in that** the apparatus comprises a second processing unit with three additional columns.

19. The apparatus according to claim 18, **characterized in that** the first and the second processing unit are connected via a buffer tank or a solvent removal unit.

20. A computer program product comprising computer program code means for controlling one or more processors of a computer system for controlling a method of separating a feed mixture (F) comprising at least one solvent and two solutes by an intermittent multi column chromatography process with a basic step N performed in a predetermined switching time period (t*), basic step N comprises two sub steps which are carried out sequentially according to a predetermined step ratio (α), such that:

   - in sub step one inlet ports (IP1, IP3) and outlet ports (OP1, OP3) are opened, a desorbent (D) enters upstream of a first section (I) through IP1, the feed mixture (F) enters upstream of a third section (III) through IP3, a first outlet stream comprising the desorbent (D) and at least one solute (E) is withdrawn downstream of the first section (I) through OP1, a second outlet stream comprising the desorbent (D) and at least a further solute is withdrawn downstream of a the third section (III) through OP3
   - in sub step two inlet ports (IP1, IP2, IP3) and outlet ports (OP1, OP2, OP3) are closed, a fluid stream comprising the desorbent (D) and part of the feed mixture (F) is circulated through three sections (I' to III') in a closed loop
   - in a basic step N+1, sub step one the inlet ports (IP1, IP3) and the outlet ports (OP1, OP3) are open, the desorbent (D) enters upstream of the first section (I) through IP2, the feed mixture (F) enters upstream of a third section (III) through IP1, a first outlet stream comprising the desorbent (D) and at least one solute is withdrawn downstream of the first section (I) through OP2, a second outlet stream comprising the desorbent (D) and at least a further solute is withdrawn downstream of a the third section (III) through OP1
   - between basic step N and basic step N+1, a position of feed mixture and desorbent supply (D, F) and a position of withdrawal of outlet streams (E, R) are shifted by one inlet port (IP1 to IP3), respectively one outlet port (OP1 to OP3), in direction of a fluid flow.

# Fig. 1

sub step 2

S1

sub step 1

F

B

A

D

State of the art

# Fig. 2

# Fig. 3

Fig. 4

1st sub step
α

2nd sub step
1 - α

EP 2 711 063 A1

Fig. 5

# Fig. 6

EP 2 711 063 A1

Fig. 7

sub step 2

sub step 1

D' → [ Ib' ] → [ IIb' ] → [ IIIb' ]
      ↓E'      ↑F'        ↓R'

D' → [ Ib ] → [ IIb ] → [ IIIb ]
                          ↓D'+R'

[ Ia' ] → [ IIa' ] → [ IIIa' ]
                       ↓D+R

D → [ Ia ] → [ IIa ] → [ IIIa ]
      ↓E     ↑F        ↓R

Buffer Tank

13

20"

100"

10"

EP 2 711 063 A1

# Fig. 8

25

# Fig. 9(a)

| Run | $c_F$ [g/l] | Operating mode | $\bar{m}_I$ | $\bar{m}_{II}$ | $\bar{m}_{III}$ | $\bar{m}_{IV}$ | $t^*$ [min] | $\alpha$ [-] | $Q_I$ | $Q_{II}$ | $Q_{III}$ | $Q_{IV}$ | Raffinate | Extract | $P_r$ [g/L h] | SC [L/g] |
|---|---|---|---|---|---|---|---|---|---|---|---|---|---|---|---|---|
| | | | Average Flow rate ratio [-] | | | | | | Flow rate [mL/min] | | | | Purity [%] | | | |
| K | 5.02 | I-SMB opt | 5.70 | 1.86 | 4.07 | 1.10 | 5.21 | 0.22 | 3.16 | 0.52 | 2.04 | 0.66 | 100 | 98.9 | 30.1 | 0.61 |
| | 5.02 | 3C-ISMB | 5.70 | 1.86 | 4.07 | 1.10 | 5.21 | 0.22 | 3.16 | 0.52 | 2.04 | 0.66 | 100 | 99.0 | 41.3 | 0.61 |
| | 5.02 | 3C-ISMB opt | 5.70 | 1.86 | 4.07 | 1.11 | 3.94 | 0.29 | 3.16 | 0.52 | 2.04 | 0.96 | 100 | 98.5 | 57.5 | 0.61 |
| L | 9.87 | I-SMB opt | 5.54 | 1.60 | 3.63 | 0.99 | 5.12 | 0.21 | 3.39 | 0.46 | 1.97 | 0.64 | 100 | 97.9 | 60.6 | 0.33 |
| | 9.87 | 3C-ISMB | 5.54 | 1.62 | 3.63 | 0.99 | 5.12 | 0.21 | 3.40 | 0.47 | 1.97 | 0.64 | 100 | 98.1 | 82.0 | 0.33 |
| | 9.87 | 3C-ISMB opt | 5.57 | 1.63 | 3.65 | 0.99 | 3.85 | 0.28 | 3.41 | 0.48 | 1.98 | 0.93 | 100 | 97.5 | 108.7 | 0.33 |
| M | 15.00 | I-SMB opt | 5.86 | 1.81 | 3.69 | 1.18 | 5.07 | 0.20 | 3.66 | 0.49 | 1.96 | 0.67 | 100 | 99.3 | 79.0 | 0.23 |
| | 15.00 | 3C-ISMB | 5.80 | 1.80 | 3.65 | 1.18 | 5.07 | 0.20 | 3.62 | 0.49 | 1.93 | 0.67 | 100 | 99.4 | 107.1 | 0.23 |
| | 15.00 | 3C-ISMB opt | 5.82 | 1.81 | 3.66 | 1.17 | 3.79 | 0.27 | 3.64 | 0.50 | 1.95 | 0.98 | 100 | 99.6 | 149.4 | 0.23 |

# Fig. 9(b)

| Run | $c_F$ [g/l] | Operating mode | $\bar{m}_I$ | $\bar{m}_{II}$ | $\bar{m}_{III}$ | $\bar{m}_{IV}$ | $t^*$ [min] | $\alpha$ [-] | $Q_I$ | $Q_{II}$ | $Q_{III}$ | $Q_{IV}$ | Raffinate | Extract | $P_r$ [g/L h] | SC [L/g] |
|---|---|---|---|---|---|---|---|---|---|---|---|---|---|---|---|---|
| | | | Average Flow rate ratio [-] | | | | | | Flow rate [μL/min] | | | | Purity [%] | | | |
| 1st stage | 1.50 | 3C-ISMB opt | 5.78 | 2.56 | 4.74 | 0.71 | 4.50 | 0.44 | 2.06 | 0.75 | 1.64 | 0.93 | 99.6 | 99.4 | 15.3 | 2.20 |
| 2nd stage | 0.58 | 3C-ISMB opt | 2.84 | 1.82 | 2.13 | 0.59 | 3.56 | 0.33 | 1.51 | 0.82 | 1.04 | 0.93 | 99.3 | 99.3 | 1.3 | 7.35 |

# Fig. 10

## Fig. 11

**(a)**

**(b)**

**(c)**

## Fig. 12

# Fig. 13

(a)

(b)

(c)

# Fig. 14

**(a)**

**(b)**

## Fig. 15

# Fig. 16

Europäisches
Patentamt

European
Patent Office

Office européen
des brevets

# EUROPEAN SEARCH REPORT

Application Number

EP 12 00 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 122 275 A (RASCHE JOHN F [US]) 16 June 1992 (1992-06-16) * column 3, line 36 - line 50 * * column 3, line 62 - column 4, line 22 * * column 5, line 24 - line 52; figure 3 * ----- | 1-17,20 | INV. B01D15/18 |
| X | SIMON JERMANN ET AL: "Intermittent Simulated Moving Bed Processes for Chromatographic Three-Fraction Separation", ORGANIC PROCESS RESEARCH & DEVELOPMENT, vol. 16, no. 2, 17 February 2012 (2012-02-17), pages 311-322, XP055053511, ISSN: 1083-6160, DOI: 10.1021/op200239e * Paragraph 2. Theory and process schemes; figure 1 * ----- | 1-7,17, 20 | |
| X | SHIGEHARU KATSUO ET AL: "Intermittent simulated moving bed chromatography: 2. Separation of Tröger's base enantiomers", JOURNAL OF CHROMATOGRAPHY A, vol. 1217, no. 18, 1 April 2010 (2010-04-01), pages 3067-3075, XP055053512, ISSN: 0021-9673, DOI: 10.1016/j.chroma.2010.02.083 * Paragraph 2.1. Implementation of the I-SMB technology; figure 1 * ----- -/-- | 1-7 | TECHNICAL FIELDS SEARCHED (IPC) B01D |

The present search report has been drawn up for all claims

| Place of search | Date of completion of the search | Examiner |
|---|---|---|
| Munich | 15 February 2013 | Fourgeaud, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 711 063 A1

EUROPEAN SEARCH REPORT

Application Number

EP 12 00 6612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIELA ACETTI ET AL: "Intermittent simulated moving bed chromatographic separation of (RS,RS)-2-(2,4-difluorophenyl)butane-1,2,3-triol", JOURNAL OF CHROMATOGRAPHY A, vol. 1217, no. 17, 1 April 2010 (2010-04-01), pages 2840-2846, XP055053513, ISSN: 0021-9673, DOI: 10.1016/j.chroma.2010.02.048 * 3.1. Process description * * 3.2. Process design of the I-SMB separation; figure 2 * | 1-7 | |
| X,D | KR 2009 0039979 A (INHA IND PARTNERSHIP INST [KR]) 23 April 2009 (2009-04-23) | 17-19 | |
| A | * abstract; figures 7,8 * | 1-16 | |
| A | US 4 923 616 A (HIRATA KENTAROU [JP] ET AL) 8 May 1990 (1990-05-08) * column 2, line 36 - line 64; figures 1,5,11 * | 1-20 | TECHNICAL FIELDS SEARCHED (IPC) |

The present search report has been drawn up for all claims

| Place of search | Date of completion of the search | Examiner |
|---|---|---|
| Munich | 15 February 2013 | Fourgeaud, Damien |

**ANNEX TO THE EUROPEAN SEARCH REPORT
ON EUROPEAN PATENT APPLICATION NO.**

EP 12 00 6612

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2013

| Patent document cited in search report | | Publication date | Patent family member(s) | Publication date |
|---|---|---|---|---|
| US 5122275 | A | 16-06-1992 | NONE | |
| KR 20090039979 | A | 23-04-2009 | NONE | |
| US 4923616 | A | 08-05-1990 | NONE | |

EPO FORM P0459

For more details about this annex : see Official Journal of the European Patent Office, No. 12/82

## REFERENCES CITED IN THE DESCRIPTION

### Patent documents cited in the description

- US 2985589 A, Broughton
- KR 20090039979, Lee
- US 5064539 A, Tanimura

### Non-patent literature cited in the description

- **S. KATSUO ; M. MAZZOTTI.** Intermittent simulated moving bed chromatography: 1. Design criteria and cyclic steady-state. *J. Chrom. A,* 2010, vol. 1217 (8), 1354-1361
- **KATSUO et al.** Intermittent simulated moving bed chromatography: 2. Separation of Tröger's base enantiomers. *J. Chrom. A,* 2010, vol. 1217 (18), 3067-3075
- **S. KATSUO et al.** Intermittent simulated moving bed chromatography: 3. Separation of Tröger's base enantiomers under nonlinear conditions. *J. Chrom. A,* 2011, vol. 1218 (52), 9345-9352